# EUROPEAN PATENT APPLICATION

(11) **EP 2 677 716 A1**
(43) Date of publication of application: **25.12.2013**
(21) Application number: 12761353.7
(22) Date of filing: 16.03.2012
(51) Int. Cl.: H04L 29/06, H04L 12/28, H04L 29/12

(54) **ACCESS CONTROL METHOD, ACCESS DEVICE AND SYSTEM**

(30) Priority: 18.03.2011 CN 201110065919
(71) Applicant: Huawei Technologies Co., Ltd., Shenzhen, Guangdong 518129 (CN)
(72) Inventor: YANG, Xianjie, Shenzhen Guangdong 518129 (CN); YIN, Jiasheng, Shenzhen Guangdong 518129 (CN)
(74) Representative: Pfenning, Meinig & Partner GbR
(86) International application number: PCT/CN2012/072457
(87) International publication number: WO 2012/126335

(57) **Abstract**

The present invention discloses an access control method, an access device, and a system, including: receiving an access request, and acquiring an IP address and a MAC address; when the MAC address is already bound, a port bound to the MAC address is different from a current port, and a binding relationship between the MAC address and the bound port is invalid, deleting the binding relationship between the MAC address and the bound port, and establishing a binding relationship between the MAC address and the current port; when the MAC address is not bound, the quantity of MAC addresses bound to the current port already reaches a maximum value, and binding relationships of the current port include an invalid binding relationship, deleting the invalid binding relationship, and establishing a binding relationship between the MAC address and the current port. By using the access control method disclosed in the present invention, the validity of a binding relationship is detected to determine whether a received protocol request is address spoofing or authorized address migration caused by a normal service requirement is determined. In this way, not only a requirement for a security feature is satisfied, but also a requirement in a special scenario is satisfied.

## Description

### TECHNICAL FIELD

The present invention relates to communication technologies, and in particular, to an access control method, an access device, and a system.

### BACKGROUND

In an IP (Internet Protocol, Internet protocol) network model or an IPv6 (Internet Protocol Version 6, new generation Internet protocol) network model, a CPE/RG (customer premises equipment/router gateway, customer premises equipment/router gateway) can access network resources or communicate with another CPE/RG only after acquiring a unique IP address (IPv6 address or IPv6 prefix). Currently, according to different link layer encapsulations, the CPE/RG acquires an IP address, an IPv6 address or an IPv6 prefix mainly in the following two manners: an IPoE (IP over Ethernet, IP over Ethernet) link encapsulation type, which acquires an IP address (an IPv6 address or an IPv6 prefix) dynamically over the DHCP (Dynamic Host Configuration Protocol, dynamic host configuration protocol) protocol or the DHCPv6 (Dynamic Host Configuration Protocol for IPv6, dynamic host configuration protocol for IPv6) protocol; and a PPPoE (Point to Point over Ethernet, point to point over Ethernet) link encapsulation type, which acquires an IP address (an IPv6 address or an IPv6 prefix) over the PPPoE protocol.

The IPoE link encapsulation type has a poorer security. A malicious CPE/RG may spoof by counterfeiting an IP address (an IPv6 address or anIPv6 prefix) or a MAC address of another CPES/RG, so that the network suffers attacks easily. As network security becomes increasingly important, a securer access method must be provided to prevent network attacks. An AN (Access Node, access node) is responsible for providing the CPE/RG with network access services in the network architecture. The AN is a device closest to the CPE/RG, and needs to process the DHCP protocol (DHCPv6 protocol). Therefore, a current access method for anti-IP address spoofing and anti-MAC address spoofing in an AN is implemented based on principles of the DHCP protocol.

The AN acquires, by monitoring DHCP packets, a MAC address of the CPE/RG and an IP address allocated by the DHCP server to the CPE/RG, and establishes a binding relationship between the acquired MAC address, IP address, and a user port on the AN. The user port may not necessarily be a physical port, and may be a virtual channel port according to different access modes. Generally, one port may be allowed to bind to multiple MAC addresses and IP addresses, but the quantity of MAC addresses and IP addresses bound to the same port needs to be limited. Once the limit value is exceeded, new MAC addresses and IP addresses are no longer bound to the same port.

When a packet is forwarded on a forwarding plane, a user port receiving the packet is acquired to check whether a MAC address and an IP address of the packet comply with the established binding relationship; if the MAC address and IP address of the packet comply with the established binding relationship, the access is allowed; otherwise, the access is denied. This prevents a user from accessing a network by performing MAC address spoofing and IP address spoofing. On a control plane, if a new CPE/RG initiates, by using a MAC address which is the same as the bound MAC address, a DHCP protocol packet to apply for an IP address, the established binding relationship is also checked; if user port information is different, the DHCP protocol packet is considered as MAC address spoofing, and then the DHCP protocol packet is discarded. According to the principles of the DHCP protocol, the validity time of establishing a binding relationship is the same as the lease duration of the IP address allocated by using DHCP. When the lease duration expires, a binding relationship table is deleted.

When a CPE/RG applies for an IP address over the DHCP protocol, to reduce network resources occupied by the DHCP protocol packet, the lease duration is generally longer than 24 hours. During the lease duration, the binding relationship table keeps effective. However, when a deployment test is carried out, a same terminal may be used on different ports to test whether DHCP services are normal, and a MAC address and an IP address need to be migrated on different user ports within a short time period. In this scenario, because the MAC address and the IP address are already bound to a port, when the same MAC address is migrated to other ports to implement DHCP protocol application, the DHCP protocol application is considered as MAC address spoofing, and the application is rejected. The application cannot be implemented on another port until the lease duration of the original binding relationship is deleted upon expiry. Because the lease duration of the original binding relationship is generally long, the foregoing service cannot be implemented. In addition, when the specification of the binding relationship table on a port is full, an access device is replaced. For example, when a terminal is damaged and replaced, a DHCP process needs to be implemented by using a new MAC address. However, the original binding relationship still exists due to the long lease duration of the original binding relationship table, and the process cannot be implemented by using the new MAC address, so that the service cannot be implemented.

Evidently, the access control method in the prior art used to prevent a user from accessing a network by performing MAC address spoofing and IP address spoofing has poor adaptability, and affects the implementation of a normal service.

### SUMMARY

The present invention provides an access control method, an access device, and a system to address the defect in the method for establishing a binding relationship in the prior art. The specific solutions are as follows:

An access control method includes:
receiving an access request, and acquiring an Internet protocol IP address of a user and a media access control MAC address of the user;
when the MAC address is already bound, a port bound to the MAC address is different from a current port receiving the access request, and a binding relationship between the MAC address and the bound port is invalid, deleting the binding relationship between the MAC address and the bound port, establishing a binding relationship between the MAC address and the current port, and allowing the user to access network resources; and
when the MAC address is not bound, the quantity of MAC addresses bound to the current port already reaches a maximum value, and binding relationships between the current port and MAC addresses bound to the current port include an invalid binding relationship, deleting the invalid binding relationship, establishing a binding relationship between the MAC address and the current port, and allowing user access.

An access device includes:
a receiving module, configured to receive a protocol request, and acquire an Internet protocol address acquired by a user and a media access control MAC address of the user;
a first binding state judging module, configured to determine whether the MAC address is already bound;
a first port judging module, configured to determine whether a port bound to the MAC address is the same as a current port receiving the protocol request;
a first binding relationship judging module, configured to determine whether a binding relationship between the MAC address and the bound port is invalid;
a first establishing module, configured to: when it is determined that the MAC address is already bound, the port bound to the MAC address is different from the current port receiving the request, and the binding relationship between the MAC address and the bound port is invalid, delete the binding relationship between the MAC address and the bound port, establish a binding relationship between the MAC address and the current port, and allow user access; and
a binding quantity judging module, configured to determine whether the quantity of MAC addresses bound to the current port reaches a maximum value when it is determined that the MAC address is not bound;
a second binding relationship judging module, configured to determine whether binding relationships between the current port and MAC addresses bound to the current port include an invalid binding relationship when it is determined that the quantity of MAC addresses bound to the current port already reaches a maximum value; and
a second establishing module, configured to: when the MAC address is not bound, the quantity of MAC addresses bound to the current port already reaches a maximum value, and the binding relationships between the current port and MAC addresses bound to the current port include an invalid binding relationship, delete the invalid binding relationship, establish a binding relationship between the MAC address and the current port, and allow user access.

An access control system includes a terminal device and an access device.

The terminal device is configured to send an access request to the access device.

The access device is configured to: receive the access request, acquire an Internet protocol IP address of a user and a medium access control MAC address of the user, when the MAC address is already bound, a port bound to the MAC address is different from a current port receiving the request, and a binding relationship between the MAC address and the bound port is invalid, delete the binding relationship between the MAC address and the bound port, establish a binding relationship between the MAC address and the current port, and allow user access; and when the MAC address is not bound, the quantity of MAC addresses bound to the current port already reaches a maximum value, and binding relationships between the current port and MAC addresses bound to the current port include an invalid binding relationship, delete the invalid binding relationship, establish a binding relationship between the MAC address and the current port, and allow user access.

It can be seen, from the foregoing technical solutions that by using the access control method disclosed by the embodiments of the present invention, that the validity of a binding relationship is detected to determine whether a received protocol request is MAC address spoofing or authorized migration of an IP address and a MAC address caused by a normal service requirement. In this way, not only a requirement for a security feature is satisfied, but also a requirement for applying in a special scenario is satisfied, thereby extending the application scope of the method.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a flowchart of an access control method according to an embodiment of the present invention;

FIG. 2 is a flowchart of another access control method according to an embodiment of the present invention;

FIG. 3 is a flowchart of another access control method according to an embodiment of the present invention;

FIG. 4 is a schematic structural diagram of an access device according to an embodiment of the present invention; and

FIG. 5 is a schematic diagram of an access control system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments derived by a person of ordinary skill in the art based on the embodiments of the present invention without creative efforts shall fall within the protection scope of the present invention.

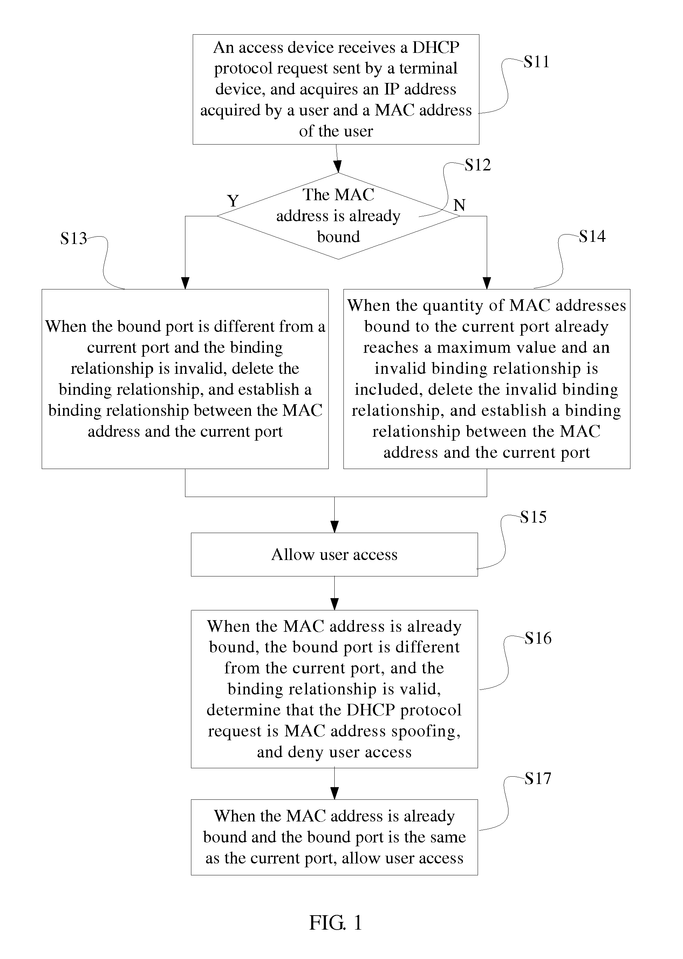

A process of an access control method provided in the present invention is illustrated in FIG. 1, including the following steps:

Step S11: An access device receives a DHCP protocol request sent by a terminal device, and acquires an IP address acquired by a user and a MAC address of the user.

The protocol in this embodiment may be a DHCP or a new generation dynamic host configuration protocol DHCPv6. When the protocol is DHCPv6, the corresponding IP address is an IPv6 address and an IPv6 prefix. The DHCP is used as an example for description.

The access device receives a DHCP packet sent by a CPE/RG, and the CPE/RG already acquires an IP address over a DHCP protocol.

Step S12: Determine whether the MAC address is already bound. If the MAC address is bound, step S 13 is performed; otherwise, step S 14 is performed.

An AN stores mapping relationships between all MAC addresses, IP addresses, and ports, and it is determined whether there is a binding relationship between the acquired MAC address of the userand a port, that is, whether the acquired MAC address is bound to the port.

Step S 13: When the bound port is different from a current port receiving the DHCP packet and the binding relationship is invalid, delete the binding relationship between the MAC address and the bound port, and establish a binding relationship between the MAC address and the current port. Then, step S15 is performed.

When the current port receiving the DHCP packet is not the port bound to the MAC address, it indicates that the CPE/RG conducts an access via a port which is not bound to the CEP/RG. In this case, it needs to detect whether the binding relationship between the MAC address and the bound port is still valid or not, that is, detect whether normal communication can still be performed between the MAC address and the port bound to the MAC address; if normal communication fails, it indicates that the binding relationship is already invalid. A cause to such invalidity may be that the CPE/RG is offline on an original bound port, that is, the CPE/RG is removed from the original port. In this case, the binding relationship between the port and the MAC address needs to be deleted to ensure that the MAC address can be bound to other ports and ensure that normal access can be implemented.

Step S14: When the quantity of MAC addresses bound to the current port receiving the DHCP packet already reaches a maximum value and an invalid binding relationship is included, delete the invalid binding relationship, and establish a binding relationship between the MAC address and the current port. Then, step S15 is performed.

When the quantity of MAC addresses bound to the current port receiving the DHCP packet already reaches a maximum value, that is, a specification set on the AN is full, a binding relationship between a non-bound MAC address of the user who initiates the DHCP packet and the current port cannot be established directly. In this case, whether binding relationships related to the port are valid needs to be determined, that is, determining whether binding relationships established with the port can ensure normal communication; if all the binding relationships can ensure normal communication, the binding relationships are valid; if a binding relationship cannot ensure normal communication, the binding relationship is already invalid. A cause to invalidity may be that a lease duration expires or that the CPE/RG is offline on the port. In this case, the invalid binding relationship may be deleted, and a binding relationship between the non-bound MAC address of the user who initiates the DHCP and the current port is established.

Step S15: Allow user access.

After a binding relationship between the MAC address of the user who initiates the DHCP packet and the current port is established, user access is allowed.

In the access control method disclosed in this embodiment, a MAC address of a user in a received DHCP packet is acquired to determine whether the MAC address is already bound, and then whether an invalid binding relationship needs to be deleted is determined according to whether the MAC address is bound and a state of the binding relationship if the MAC address is bound; and a new binding relationship is established to ensure normal access. This solves a problem in the prior art that a normal service is affected when a new binding relationship cannot be established because a lease duration of a binding relationship does not expire and when a new binding relationship cannot be established because the quantity of MAC addresses bound to a port already reaches a maximum value and a terminal needs to be replaced, thereby increasing the universality of the access control method.

In addition, after the foregoing steps of the foregoing embodiments, the method may further include the following steps:

Step S16: When the MAC address is already bound, the bound port is different from the current port, and the binding relationship is valid, it is determined that a MAC address spoofing is operating, and deny user access.

In this case, if it is determined that the binding relationship between the MAC address and the bound port is still valid, it is indicated that the CPE/RG corresponding to the MAC address is still connected to the bound port. Therefore, the currently received DHCP packet results from MAC address spoofing, and the DHCP protocol packet is discarded, and user access is denied.

Step S17: When the MAC address is already bound and the bound port is the same as the current port, allow user access.

It indicates in this step that the CPE/RG accesses a port bound to the CPE/RG. Because the AN pre-stores mapping relationships between the MAC addresse of the CPE/RG, the port, and IP addresse, the CPE/RG is allowed to access the port.

The following describes this embodiment in detail with reference to a specific example:

It is assumed that a MAC address of terminal A is MAC 1, an IP address acquired through DHCP protocol is IP 1, the AN establishes and stores a binding relationship between MAC 1 and IP 1 on port 1, and the lease duration of the binding relationship is 24 hours. During the lease duration, terminal A is removed from port 1 and accesses from port 2. In this case, because the MAC address of terminal A is already bound but a port receiving a user access request is not port 1 bound to MAC 1, the AN determines whether a binding relationship corresponding to MAC 1 is valid. Because terminal A is already removed from port 1, the binding relationship is already invalid. Therefore, the AN deletes the invalid binding relationship, and establishes a binding relationship between MAC 1 and the current access port 2 to allow user access.

It is assumed that a specification of a binding relationship table on port 1 already satisfies a maximum value, that is, the quantity of MAC addresses bound to port 1 already reaches a maximum value, if terminal B is damaged and needs to be replaced with terminal A, because the AN stores a binding relationship between port 1 and a MAC address MAC 2 and an IP address IP 2 of terminal B, while the binding relationship is invalid due to the damage of the terminal B, in this case, the AN deletes the invalid binding relationship to ensure that a binding relationship between MAC address MAC 1 of terminal A and port 1 can be established, thereby ensuring that terminal A can access normally by using the AN.

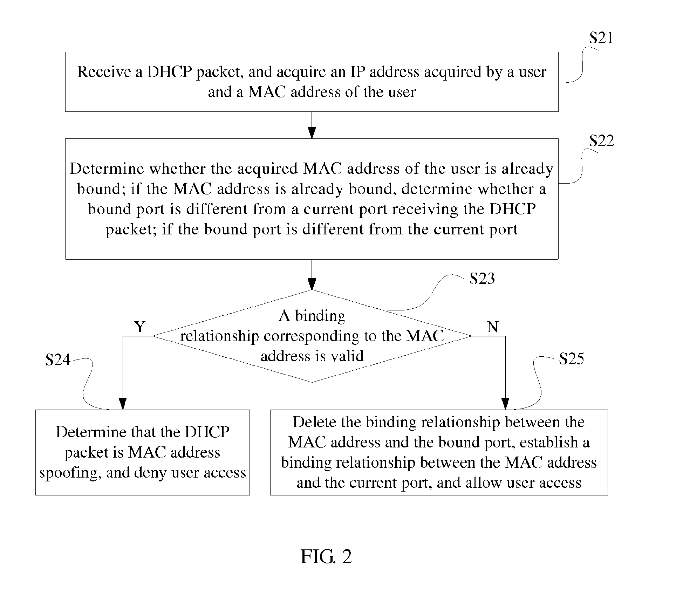

A process of another access control method disclosed in the present invention is illustrated in FIG. 2. This process is applicable to a case where when a deployment test is carried out, a same terminal is used on different ports to test whether DHCP services are normal. The specific process includes the following steps:

Step S21: Receive a DHCP packet, and acquire an IP address acquired by a user and a MAC address of the user.

Assuming that an AN establishes a binding relationship between a MAC address (MAC 1) and an IP address (IP 1) on port 1, the AN stores the binding relationship between port 1, MAC 1, and IP 1.

Step S22: Determine whether the acquired MAC address of the user is already bound; if the MAC address is already bound, determine whether a bound port is different from a current port receiving the DHCP packet. If the bound port is different from the current port, step S23 is performed.

If the AN receives, on a current port Port 2, a DHCP protocol packet initiated by a CPE/RG, and acquires the MAC address of the CPE/RG as MAC 1, a binding relationship table is queried for MAC 1, and a binding relationship between MAC 1, IP 1, and port 1 is acquired. Because the port Port 2 is different from Port 1, it is determined that the bound port is different from the current port receiving the packet.

Step S23: Determine whether a binding relationship corresponding to the MAC address of the user is valid. If the binding relationship is valid, step S24 is performed; otherwise, step S25 is performed.

Specifically, a request packet whose destination IP is the IP acquired by the user may be sent to the bound port; determine whether a reply packet which is returned by the bound port is received; if the reply packet returned is received, it is determined that the binding relationship is valid; if no reply packet returned is received, it is determined that the binding relationship is invalid.

The AN initiates an ARP request packet whose destination IP is IP 1 to Port 1.

The request packet in this embodiment may also be a neighbor discovery ND packet.

If the AN receives a reply packet returned by port 1, it is determined that port 1 can still perform normal communication, that is, it is determined that the binding relationship between MAC 1, IP 1, and port 1 is still valid. If the AN does not receive a reply packet returned by port 1, it is determined that the port 1 cannot perform normal communication, that is, it is determined that the binding relationship between MAC 1, IP 1, and port 1 is invalid.

Step S24: Determine that a MAC address spoofing exists, and deny user access.

If the binding relationship is valid, it indicates that the CPE/RG still communicates with Port 1 and MAC 1 is still bound to Port 1. This proves that the DHCP packet received in this case is MAC spoofing, and user access is denied to ensure the security of an access process.

Step S25: Delete the binding relationship of the MAC address in a current correspondence table, establish a binding relationship between the MAC address and the current port, and allow user access.

If the binding relationship is invalid, it indicates that the CPE/RG is already offline on Port 1. No matter whether specified lease duration expires, the original binding relationship, that is, the binding relationship between Port 1, MAC 1, and IP 1 is deleted directly. MAC 1 is allowed to initiate a DHCP protocol request on a new user port Port 2 to access network resources, and a binding relationship between MAC 1, IP 1, and Port 2 is established and stored in the correspondence table.

This embodiment is not limited to that the step of allowing user access is performed after the step of establishing a new binding relationship, so user access may be allowed while the binding relationship is established, or the binding relationship is established after user access is allowed.

This embodiment does not limit the manner of determining whether the binding relationship is valid by sending a request packet to IP 1, so whether the CPE/RG on an original port is already offline may also be determined by detecting the state of a physical port, that is, detecting whether a link state of a Port where the original binding relationship is located is normal, for example, whether connection still exists; if the link state is normal, it indicates that the binding relationship is valid; otherwise, the binding relationship is invalid. Whether the CPE/RG is online may also be determined by using traffic detection, that is, detecting the counted number of packets. If the counted number of packets is on the increase, it indicates that the user is online and the binding relationship is valid; otherwise, the binding relationship is invalid.

This embodiment specifically describes how the method is applied in a case where when a deployment test is carried out, a same terminal is used on different ports to test whether DHCP services are normal while the MAC of the terminal is already bound to another port, and the binding relationship still exists because a leasing duration does not expire. However, to carry out test on other ports, the original binding relationship is deleted directly without waiting for the expiry of the lease duration. This can achieve the purpose of testing services on different ports by using the same terminal, thereby extending the applicable scope of the method.

By using this method, the validity of a binding relationship is detected to determine whether a received protocol request is MAC address spoofing or authorized migration of an IP address and a MAC address caused by a normal service requirement. In this way, not only a requirement for a security feature is satisfied, but also a requirement in a special scenario is satisfied, thereby extending the application scope of the method. In addition, the validity of the binding relationship is detected only in a specific case. Compared with the method in the prior art that detection is performed by sending a request packet at short intervals to meet a requirement in a special scenario, the method provided in this embodiment reduces load on an AN device, and occupies fewer network bandwidth resources.

This embodiment does not limit that the process illustrated in FIG. 2 is only applicable to a deployment test scenario. All cases related to access control are applicable scopes of the method provided in this embodiment. For example, the method may also be applied in a broadband network gateway control device BNG accessed in fixed broadband mode and an AP (Wireless Access Point, wireless access point) and an AC (Wireless Access Controller, wireless access controller) of a WLAN (Wireless Local Area Networks, wireless local area networks) network.

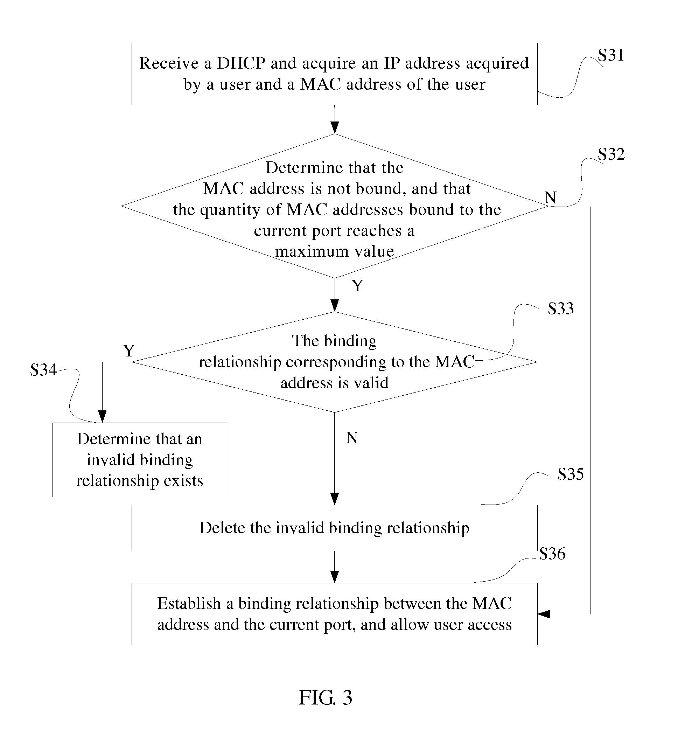

A process of another access control method disclosed in the present invention is illustrated in FIG. 3. The process is applicable to a case where after a new access device is used to replace an original one, a request is sent to a port with the largest quantity of binding relationships. The specific process is as follows:

Step S31: Receive a DHCP packet, and acquire an IP address acquired by a user and a MAC address of the user.

Assuming that an AN establishes a binding relationship between a MAC address (MAC 1) and an IP address (IP 1) on a port Port 1, the AN stores a binding relationship between Port 1, MAC 1, and IP 1. If a CPE/RG device is faulty, a new CPE/RG is used or a MAC address of the CPE/RG is updated, for example, MAC 2. The CPE/RG initiates a DHCP protocol request by using MAC 2. A port where the CPE/RG initiates the request is not limited, which may be Port 1 or other ports.

Step S32: Determine that the MAC address is not bound, and determine whether the quantity of MAC addresses bound to a current port already reaches a maximum value. If the quantity already reaches the maximum value, step S33 is performed; otherwise, step S36 is performed.

Because the AN stores correspondence between the port, the MAC address, and the IP address, the AN determines, by using the stored correspondence, that MAC 2 is not bound to the port. However, the quantity of MAC addresses bound to the current port already reaches a maximum value. A specific judgment basis may be whether an attribute value representing a set specification of the port is a preset value, for example, 1. If the attribute value is 1, it indicates that the specification is full, and the quantity of MAC addresses bound to the current port reaches a maximum value; if the attribute value is not 1, it indicates that the specification is not full, and the current port can still be bound to a MAC address.

Step S33: Determine whether the binding relationship corresponding to the MAC address of the user is valid; if the binding relationship is valid, step S34 is performed; otherwise, step S35 is performed.

Specifically, a request packet is sent to IP addresses that correspond to the MAC addresses bound to the current port. Assuming that MAC addresses bound to the current port are MAC 1, MAC 3, and MAC 4 and their corresponding IP addresses are IP 1, IP 3, and IP 4, respectively, a request packet is sent to IP 1, IP 3, and IP 4. If the AN receives a reply packet returned by port 1 over IP 1, it is determined that the binding relationship between MAC 1, IP 1, and port 1 is valid; if the AN receives a reply packet from IP 3, it is determined that the binding relationship between MAC 3, IP 3, and port 1 is valid; if the AN does not receive a reply packet returned from IP 4, it may be determined that the binding relationship between MAC 4, IP 4, and port 1 is invalid.

Step S34: Determine that no invalid binding relationship exists. Then, the process ends.

If no invalid binding relationship exists, a new binding relationship cannot be established, and the access is denied.

Step S35: Delete the invalid binding relationship.

The invalid binding relationship is deleted. The number of invalid binding relationships determined in this case may be one or multiple. In this way, a new binding relationship may be established on the current port.

Step S36: Establish a binding relationship between the MAC address and the current port, and allow user access.

This embodiment does not limit the manner of determining whether the binding relationship is valid by sending a request packet to IP 1. Therefore, whether the CPE/RG on an original port is already offline may also be determined by detecting a state of a physical port, that is, detecting whether a link state of the port where the original binding relationship is located is normal, for example, whether connection still exists; if the link state is normal, it indicates that the binding relationship is valid; otherwise, it indicates that the binding relationship is invalid. Whether the CPE/RG is online may also be determined by using traffic detection, that is, detecting the counted number of packets. If the counted number of packets is on the increase, it indicates that the user is online and the binding relationship is valid; otherwise, the binding relationship is invalid.

The process of determining whether the quantity of MAC addresses bound to a current port already reaches a maximum value and detecting an invalid binding relationship when the quantity of MAC addresses bound to the current port reaches a maximum value disclosed in this embodiment may also be applicable to the step of establishing a binding relationship between the MAC address and the current port in the embodiment illustrated in FIG. 2. This process ensures that the step can be implemented and ensures that the access is normally performed.

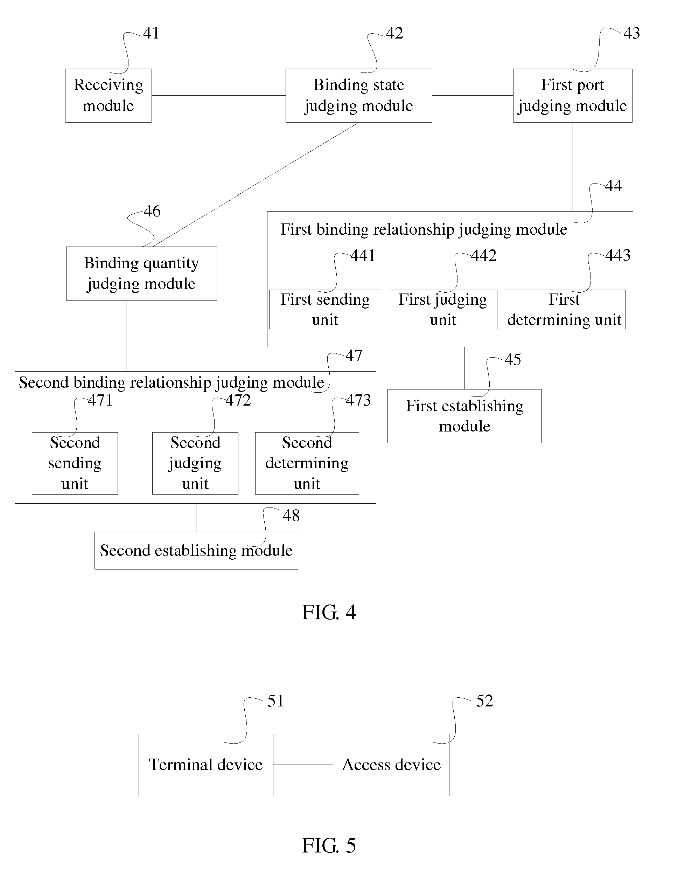

The present invention also discloses an access device. A structure of the access device is illustrated in FIG. 4, including:
a receiving module 41, a binding state judging module 42, a first port judging module 43, a first binding relationship judging module 44, a first establishing module 45, a binding quantity judging module 46, a second binding relationship judging module 47, and a second establishing module 48.

The receiving module 41 is configured to receive an access request, and acquire an IP address of a user and a MAC address of the user. The binding state judging module 42 is configured to determine whether the MAC address is already bound; the first port judging module 43 is configured to determine whether a port bound to the MAC address is the same as a current port receiving a protocol request. The first binding relationship judging module 44 is configured to determine whether a binding relationship between the MAC address and the bound port is invalid. The first establishing module 45 is configured to: when it is determined that the MAC address is already bound, the port bound to the MAC address is different from the current port receiving the request, and the binding relationship between the MAC address and the bound port is invalid, delete the binding relationship between the MAC address and the bound port, establish a binding relationship between the MAC address and the current port, and allow user access. The binding quantity judging module 46 is configured to: when it is determined that the MAC address is not bound, determine whether the quantity of MAC addresses bound to the current port already reaches a maximum value. The second binding relationship judging module 47 is configured to: when it is determined that the quantity of MAC addresses bound to the current port already reaches a maximum value, determine whether binding relationships between the current port and MAC addresses bound to the current port include an invalid binding relationship. The second establishing module 48 is configured to: when the MAC address is not bound, the quantity of MAC addresses bound to the current port already reaches a maximum value, and the binding relationships between the current port and MAC addresses bound to the current port include an invalid binding relationship, delete the invalid binding relationship, establish a binding relationship between the MAC address and the current port, and allow user access.

Further, the first binding relationship judging module 44 includes:
a first sending unit 441, configured to send a request packet whose destination IP address is the acquired IP address of the user to the bound port; a first judging unit 442, configured to determine whether a reply packet which is returned by the bound port is received; and a first determining unit 443, configured to: when a reply packet which is returned by the bound port is received, determine that the binding relationship is valid; otherwise, determine that the binding relationship is invalid.

The second binding relationship judging module 47 includes:
a second sending unit 471, configured to send a request packet to IP addresses acquired by the user corresponding to the MAC addresses bound to the current port; a second judging unit 472, configured to determine whether a reply packet corresponding to each IP address is received; and a second determining unit 473 is configured to: when a reply packet corresponding to each IP address is received, determine that no invalid binding relationship is included; otherwise, determine that an invalid binding relationship is included.

Functions of each module and unit of the access device are described as follows.

The receiving module receives an access request, and acquires an IP address of a user and a MAC address of a user. The binding state judging module determiness whether the MAC address is already bound. The first port judging module determines whether a bound port is the same as a current port receiving the access request. The first binding relationship judging module determines whether the binding relationship is invalid. When it is determined that the MAC address is already bound, the bound port is different from the current port, and the binding relationship is invalid, the first establishing module deletes the binding relationship, establishes a binding relationship between the MAC address and the current port, and allows user access. When the first port judging module determines that the MAC address is not bound, the binding quantity judging module determines whether the quantity of MAC addresses bound to the current port already reaches a maximum value. When it is determined that the quantity of MAC addresses bound to the current port already reaches a maximum value, the second binding relationship judging module determines whether binding relationships between the current port and MAC addresses bound to the current port include an invalid binding relationship. When the binding relationships between the current port and MAC addresses bound to the current port include an invalid binding relationship, the second establishing module deletes the invalid binding relationship, establishes a binding relationship between the MAC address and the current port, and allows user access.

Further, the present invention also discloses an access control system. A structure of the access control system is illustrated in FIG. 5, including: a terminal device 51 and an access device 52.

The terminal device 51 is configured to: send an access request to the access device 52. The access device 52 is configured to: receive the access request from the terminal device; acquire an Internet protocol IP address of a user and a medium access control MAC address of the user; when the MAC address is already bound, a port bound to the MAC address is different from a current port receiving the request, and a binding relationship between the MAC address and the bound port is invalid, delete the binding relationship between the MAC address and the bound port, establish a binding relationship between the MAC address and the current port, and allow user access; and when the MAC address is not bound, the quantity of MAC addresses bound to the current port already reaches a maximum value, and binding relationships between the current port and MAC addresses bound to the current port include an invalid binding relationship, delete the invalid binding relationship, establish a binding relationship between the MAC address and the current port, and allow user access.

A specific structure of the access device provided in this embodiment may be illustrated in FIG. 4.

By using the access control system disclosed in this embodiment, an access device can determine, by detecting the validity of a binding relationship, whether a received protocol request is MAC address spoofing or authorized migration of an IP address and a MAC address caused by a normal service requirement. In this way, not only a requirement for a security feature is satisfied, but also a requirement in a special scenario is satisfied, thereby extending the application scope of the method. In addition, the validity of the binding relationship is detected only in a specific case. Compared with the method in the prior art that detection is performed by sending a request packet at short intervals to meet a requirement in a special scenario, the method provided in this embodiment reduces load on an AN device, and occupies fewer network bandwidth resources.

All embodiments in the present invention are described in a progressive manner. The content emphasized by one embodiment is different from content emphasized by another embodiment. For the similar parts among all embodiments, reference may be made to the relevant parts. The apparatus disclosed in the embodiment is related to the method disclosed in the embodiments, and is therefore outlined. For the associated parts, reference may be made to the description in the method embodiments.

Those skilled in the art may be aware of that modules and steps provided in each embodiment disclosed in this specification can be implemented by electronic hardware, computer software or combination thereof. To describe the interchangeability between hardware and software clearly, components and steps of each embodiment are already described in the foregoing description according to the function commonalities. Whether these functions are executed by hardware or software depends on specific applications and design constraints of the technical solutions. Those skilled in the art can implement the described functions of each specific application by using different methods. However, such implementation should not be considered as going beyond the scope of the present invention.

The method or algorithm provided in the embodiments of the present invention may directly use a software module executed by hardware or a processor or combination thereof. The software module may reside in a random access memory (RAM), memory, a memory, a read-only memory (ROM), an electrically programmable ROM, an electrically erasable programmable ROM, a register, a hard disk, a mobile disk, a CD-ROM, or any other form of storage medium well known in the art.

The foregoing description disclosed in the embodiments allows those skilled in the art to implement or use the present invention. Various modifications made to these embodiments are apparent for those skilled in the art. The general principles defined in the present invention may be implemented in other embodiments without departing from the idea or scope of the present invention. Therefore, the present invention is not limited to the described embodiments but is extended to the widest scope that complies with the principle and novelty disclosed in the present invention.

## Claims

1. An access control method, comprising:
receiving an access request, and acquiring an Internet protocol IP address of a user and a media access control MAC address of the user;
when the MAC address is already bound, a port bound to the MAC address is different from a current port receiving the access request, and a binding relationship between the MAC address and the bound port is invalid, deleting the binding relationship between the MAC address and the bound port, establishing a binding relationship between the MAC address and the current port, and allowing user access; and
when the MAC address is not bound, the quantity of MAC addresses bound to the current port already reaches a maximum value, and binding relationships between the current port and MAC addresses bound to the current port comprise an invalid binding relationship, deleting the invalid binding relationship, establishing a binding relationship between the MAC address and the current port, and allowing user access.

2. The method according to claim 1, wherein when the MAC address is already bound, the bound port is different from the current port and the binding relationship is valid, it is determined that the access request is MAC address spoofing, and user access is denied.

3. The method according to claim 1 or 2, wherein whether the binding relationship is invalid is determined by the following steps:
sending a request packet whose destination IP address is the acquired IP address of the user to the bound port; and
determining whether a response packet returned by the bound port is received; if yes, determining that the binding relationship is valid; if not, determining that the binding relationship is invalid.

4. The method according to any one of claims 1 to 3, wherein whether an invalid binding relationship is comprised is determined by the following steps:
sending a request packet to user IP addresses that correspond to the MAC addresses bound to the current port; and
determining whether a reply packet corresponding to each of the IP addresses is received; if yes, determining that no invalid binding relationship is comprised; if not, determining that an invalid binding relationship is comprised.

5. The method according to claim 3 or 4, wherein the request packet comprises: an address resolution protocol ARP packet or a neighbor discovery ND packet.

6. An access device, comprising:
a receiving module, configured to receive a protocol request, and acquire an Internet protocol address acquired by a user and a media access control MAC address of the user;
a first binding state judging module, configured to determine whether the MAC address is already bound;
a first port judging module, configured to determine whether a port bound to the MAC address is the same as a current port receiving the protocol request;
a first binding relationship judging module, configured to determine whether a binding relationship between the MAC address and the bound port is invalid;
a first establishing module, configured to: when it is determined that the MAC address is already bound, the port bound to the MAC address is different from the current port receiving the request, and the binding relationship between the MAC address and the bound port is invalid, delete the binding relationship between the MAC address and the bound port, establish a binding relationship between the MAC address and the current port, and allow user access; and
a binding quantity judging module, configured to determine whether the quantity of MAC addresses bound to the current port reaches a maximum value when it is determined that the MAC address is not bound;
a second binding relationship judging module, configured to determine whether binding relationships between the current port and MAC addresses bound to the current port comprise an invalid binding relationship when it is determined that the quantity of MAC addresses bound to the current port reaches a maximum value; and
a second establishing module, configured to: when the MAC address is not bound, the quantity of MAC addresses bound to the current port reaches a maximum value, and the binding relationships between the current port and MAC addresses bound to the current port comprise an invalid binding relationship, delete the invalid binding relationship, establish a binding relationship between the MAC address and the current port, and allow user access.

7. The access device according to claim 6, wherein the first binding relationship judging module comprises:
a first sending unit, configured to send a request packet whose destination IP address is the acquired IP address of the user to the bound port;
a first judging unit, configured to determine whether a reply packet returned by the bound port is received; and
a first binding relationship determining unit, configured to: when a reply packet returned by the bound port is received, determine that the binding relationship between the MAC address and the bound port is valid; otherwise, determine that the binding relationship between the MAC address and the bound port is invalid.

8. The access device according to claim 6 or 7, wherein the second binding relationship judging module comprises:
a second sending unit, configured to send a request packet to IP addresses of the user that correspond to the MAC addresses bound to the current port;
a second judging unit, configured to determine whether a reply packet corresponding to each of the IP addresses is received; and
a second determining unit, configured to: when a reply packet corresponding to each of the IP addresses is received, determine that no invalid binding relationship is comprised; otherwise, determine that an invalid binding relationship is comprised.

9. An access control system, comprising a terminal device and an access device, wherein:
the terminal device is configured to send an access request to the access device; and
the access device is an access device according to any one of claims 6 to 8.

10. A computer program product, comprising computer program codes, wherein when the computer program codes are performed by a computer unit, the computer unit performs the actions according to claims 1 to 5.
